# DEMANDE DE BREVET EUROPEEN

(11) **EP 0 930 183 A1**
(43) Date de publication de la demande: **21.07.1999**
(21) Numéro de dépôt: 98402663.3
(22) Date de dépôt: 27.10.1998
(51) Int. Cl.: B60G 21/05, B60G 13/00, F16F 9/54

(54) **Dispostif de suspension arrière d'un véhicule automobile**

(30) Priorité: 16.01.1998 FR 9800402
(71) Demandeur: AUTOMOBILES PEUGEOT, 75116 Paris (FR); AUTOMOBILES CITROEN, 92200 Neuilly-sur-Seine (FR)
(72) Inventeur: Galtier, Lucien, 91390 Morsang sur Orge (FR)
(74) Mandataire: Gendraud, Pierre

(57) **Abrégé**

La présente invention concerne un dispositif de suspension pour un train arrière d'un véhicule automobile du type à traverse déformable qui est constitué de deux bras tirés (1) reliés entre eux par une traverse (2) dont l'une des extrémités des bras supporte l'axe des roues (4) et l'autre extrémité est fixée à la structure (6) au moyen d'une articulation élastique (A), destinée à filtrer en partie les vibrations en provenance des roues (4), comportant pour chaque roue d'une part un amortisseur (14) disposé sous le plancher (6) du véhicule et d'autre part un moyen de rappel élastique également disposé sous le plancher (6). Ce dispositif est remarquable par le fait que l'amortisseur (14) est incliné en direction de la roue (4) opposée dans un plan sensiblement vertical transversal à l'axe longitudinal du véhicule.

## Description

La présente invention concerne un dispositif de suspension arrière d'un véhicule automobile.

Elle se rapporte plus particulièrement à un dispositif de suspension d'un train arrière, du type à traverse déformable, qui est constitué de deux bras tirés reliés entre eux par une traverse dont l'une des extrémités des bras supporte l'axe des roues et l'autre extrémité est fixée à la structure au moyen d'une articulation élastique, destinée à filtrer en partie les vibrations en provenance de la roue.

Dans un tel type de train arrière la suspension est généralement constituée d'un ressort hélicoïdal centré sur un amortisseur vertical implanté dans le passage de roue.

Un tel dispositif de suspension nécessite d'avoir une course totale de l'amortisseur qui est plus grande que la course verticale de la roue ce qui augmente la masse et le coût de l'amortisseur. De plus, ce type d'architecture de suspension réduit la largeur du coffre du véhicule automobile, ce qui s'avère gênant pour des véhicules du type monospaces ou break.

On connaît déjà, des dispositifs de suspension permettant de résoudre les inconvénients mentionnés ci-dessus, notamment par le brevet FR-A-2 559 102, qui divulgue un dispositif de suspension arrière comportant pour chaque roue d'une part un amortisseur disposé sous le plancher du véhicule et incliné vers l'avant dans un plan parallèle au plan de roue et d'autre part un ressort hélicoïdal également disposé sous le plancher qui prend appui à l'une de ses extrémités sur la traverse et à l'autre extrémité sur le plancher.

L'inconvénient majeur de ce type de dispositif de suspension connu, réside dans le fait qu'une telle disposition de l'amortisseur perturbe le filtrage et tend à s'opposer au filtrage longitudinal du train dans le plan horizontal.

Le but de la présente invention est de proposer un dispositif de suspension arrière d'un véhicule automobile qui permet de résoudre les inconvénients mentionnés ci-dessus.

A cet effet, la présente invention concerne un dispositif de suspension pour un train arrière d'un véhicule automobile du type à traverse déformable qui est constitué de deux bras tirés reliés entre eux par une traverse dont l'une des extrémités des bras supporte l'axe des roues et l'autre extrémité est fixée à la structure au moyen d'une articulation élastique, destinée à filtrer en partie les vibrations en provenance des roues, comportant pour chaque roue d'une part un amortisseur disposé sous le plancher du véhicule qui est incliné en direction de la roue opposée dans un plan sensiblement vertical transversal à l'axe longitudinal du véhicule et d'autre part un moyen de rappel élastique également disposé sous le plancher, caractérisé en ce que l'amortisseur est interposé entre le plancher et le train arrière en étant fixé d'une part dans sa partie inférieure sur le bras tiré par l'intermédiaire d'une articulation élastique prise dans une chape soudée sur ledit bras tiré et d'autre part dans sa partie supérieure sur le plancher par l'intermédiaire d'une articulation élastique, chacune des articulations élastiques étant constituée d'un axe traversant un manchon élastique qui est rendu solidaire de l'amortisseur, et en ce que chacun des axes des articulations de l'amortisseur est contenu respectivement dans un plan, ces deux plans étant parallèles entre eux et orthogonaux à l'axe de l'amortisseur mais lesdits axes des articulations ne sont pas parallèles entre eux.

Le dispositif de suspension suivant l'invention peut également comporter une ou plusieurs des caractéristiques suivantes:
- au niveau sensiblement de l'axe de la roue est disposé un appui inférieur des moyens de rappel élastique qui est solidaire du bras tiré.
- les moyens de rappel élastique sont constitués d'une part d'un ressort métallique et d'autre part d'une butée élastique fixée au plancher et centrée à l'intérieur du ressort.
- au droit de l'appui inférieur est aménagé sur le plancher un appui supérieur pour le ressort métallique.
- l'amortisseur est constitué d'un vérin hydropneumatique qui est relié à une sphère.
- le moyen de rappel élastique est constitué d'une butée élastique fixée sur le plancher et qui est apte à coopérer avec un appui inférieur fixé sur le bras au niveau sensiblement de l'axe de la roue.

Les caractéristiques de l'invention mentionnées ci-dessus, ainsi que d'autres, apparaîtront plus clairement à la lecture de la description suivante de deux exemples de réalisation, en se référant aux dessins annexés sur lesquels :
- la figure 1 est une vue schématique partielle, côté droit, en perspective d'un premier mode de réalisation du dispositif de suspension arrière selon la présente invention,
- la figure 2 est une vue suivant la flèche F de la figure 1, et
- la figure 3 est une vue schématique partielle, côté droit, en perspective d'un second mode de réalisation du dispositif de suspension arrière selon la présente invention,

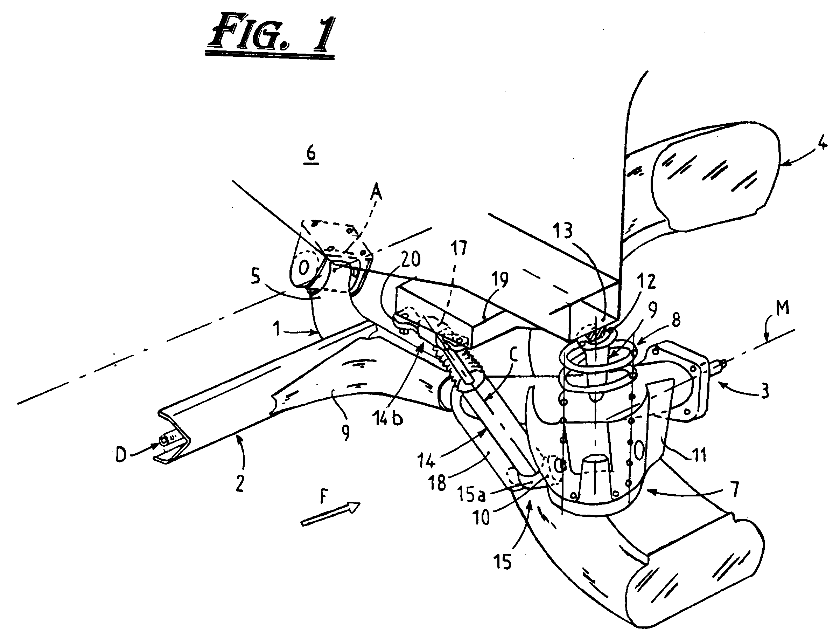

On a représenté partiellement à la figure 1, le côté droit d'un train arrière à traverse déformable d'un véhicule automobile qui est constitué, classiquement, de deux bras tirés 1 reliés entre eux par une traverse 2, de section en forme de V, dont l'une des extrémités des bras supporte un pivot 3, des roues 4 et l'autre extrémité 5 est fixée à la structure 6 au moyen d'un dispositif d'articulation A qui est constitué par exemple de manchons élastique. Une barre anti-dévers D est disposé à l'intérieur de la traverse 2 et fixée, par exemple, par boulonnage à chacune de ses extrémités sur le bras tiré 1 correspondant. Afin de rigidifier le train arrière, ce-dernier est pourvu, de manière symétrique par rapport à un axe longitudinal médian, non représenté, du train arrière, d'un gousset 9 qui est soudé sur la traverse 2 et sur le bras tiré 1.

Chacun des bras tirés 1 est constitué par exemple d'un profilé tubulaire.

De manière classique, la traverse 2 est située en avant d'un axe M passant par le centre des roues 4.

Suivant un premier mode de réalisation de l'invention, ce train arrière est pourvu pour chaque roue 4, d'une suspension métallique disposée sous le plancher 6 du véhicule, préservant ainsi toute la largeur du coffre du véhicule.

Ce dispositif de suspension est constitué sensiblement au niveau de l'axe M de roue 4 d'un appui inférieur 7, d'un ressort 8 et d'une butée élastique 9, qui est réalisé par exemple en tôle, sous la forme générale d'une chaise, comme visible à la figure 1, qui est soudé par l'intermédiaire de deux ailes 10 et 11 au bras tiré 1.

Au droit de cet appui inférieur 7, sur le plancher 6 du véhicule est aménagé un centrage 12 et un appui 13 pour le ressort 8 afin de filtrer les efforts de roulage par rapport au plancher.

La butée d'attaque élastique 9 est liée au plancher 6, au droit de l'appui inférieur 7 par exemple par vis et est centrée à l'intérieur du ressort 8 à boudin de suspension.

Un amortisseur 14 est également interposé entre le plancher 6 et le train arrière en étant fixé d'une part dans sa partie basse 14a sur le bras tiré 1 par l'intermédiaire d'une articulation élastique 15a prise dans une chape 15 et d'autre part dans sa partie haute 14b sous le plancher 6 du véhicule par l'intermédiaire d'une articulation élastique 17.

La chape 15 est constituée par un flasque vertical 18 lié au bras tiré 1 par exemple par soudage et par une aile 10 de l'appui inférieur 7 de suspension.

On notera que cette chape 15 peut bien entendu faire partie d'une même pièce avec l'appui inférieur et être obtenu par exemple par découpage et pliage.

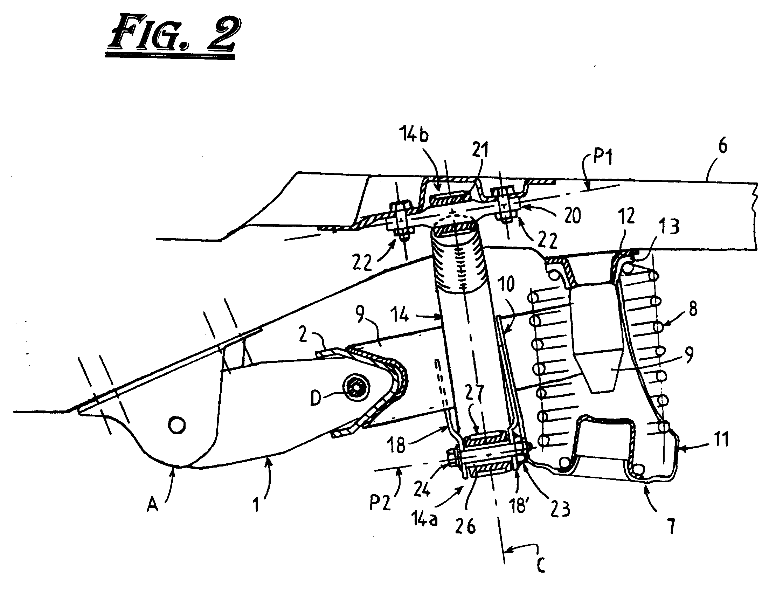

Selon encore une autre variante, représenté à la figure 2, un autre flasque vertical 18' est soudé au bras tiré afin de constituer la chape 15.

Cet amortisseur 14 est incliné vers la roue opposée, avantageusement, dans un plan sensiblement vertical transversal à l'axe longitudinal du véhicule de sorte que l'axe de coulissement C de l'amortisseur 14 soit contenu dans un plan sensiblement vertical perpendiculaire au sens de filtrage longitudinal des articulations élastique 17 avant des bras tirés 1, afin que les efforts d'amortissements n'aient aucune incidence sur les déplacements de filtrage de roue dans le plan horizontal suivant l'axe longitudinal du véhicule.

Au droit de la fixation supérieure de l'amortisseur 14 qui est lié au plancher 6, ce dernier est renforcé par des traverses de plancher 19, comme visible à la figure 1.

La liaison entre l'amortisseur 14 et les traverses 19 de plancher 6 est réalisée par une articulation élastique qui est constituée d'un axe 20 traversant un manchon élastique 21 qui est rendu solidaire de l'amortisseur 14. Cet axe 20 est pourvu de part et d'autre de l'articulation d'un moyen de fixation par exemple une oreille de fixation 22 munie d'un orifice pour le passage d'une vis de fixation sur les traverses 19 de caisse.

Une articulation élastique est également disposée dans la partie inférieure de l'amortisseur 14, comme visible à la figure 2, et fixé à la chape 15 par exemple par une tige filetée 24 formant axe qui traverse de part et d'autre les flasques 18 et 18' -ou 10- dont une extrémité filetée est boulonnée à un ecrou soudé sur l'un des flasques 18'.

Chacun des axes 20 et 24 des articulations respectivement supérieure et inférieure de l'amortisseur 14 est contenu dans un plan respectivement P1 et P2. Ces deux plans P1 et P2 sont parallèles entre eux et orthogonaux à l'axe C de l'amortisseur 14, mais les axes 20 et 24 des articulations ne sont pas parallèles entre eux, comme visible à la figure 1, afin que les débattements verticaux du train génèrent le moins possible des prises d'angles interne à chacune des articulations de l'amortisseur 14, notamment entre l'axe d'une l'entretoise interne 26, comme représenté à la figure 2, et l'axe d'une bague externe 27 soudée sur le corps de l'amortisseur 14.

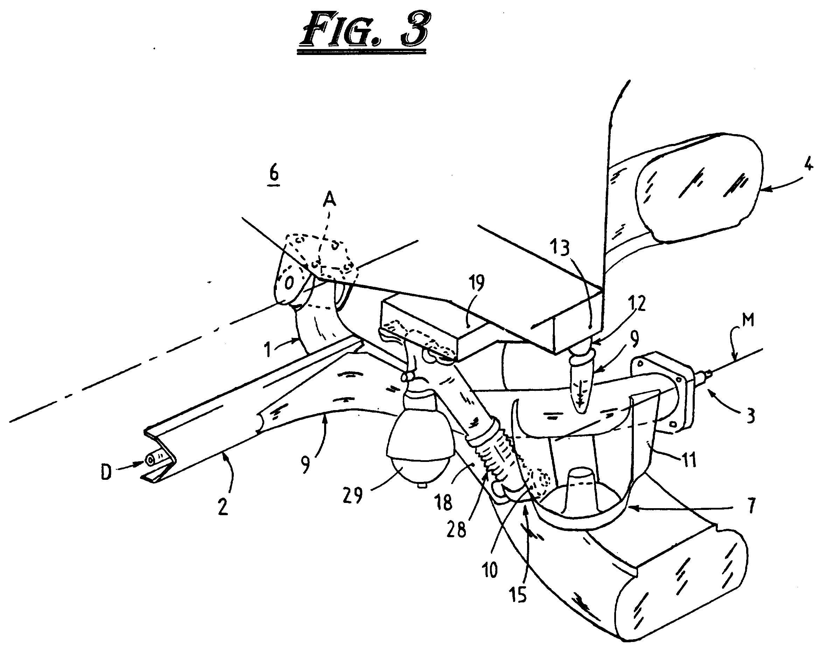

On a représenté à la figure 3, un autre mode de réalisation de l'invention dans lequel la suspension métallique est remplacée par une suspension hydropneumatique constituée, classiquement, d'un vérin de suspension 28 qui est relié à une sphère 29. Ce vérin de suspension 28 est disposé en lieu et place de l'amortisseur 14 dans le cas de la suspension métallique comme décrit ci-dessus.

Le train arrière est constitué de la même manière que dans la suspension métallique, de sorte que les éléments identiques portent les mêmes références.

On notera que dans cette variante, le ressort à boudin 8 est supprimé, de tel manière que l'appui inférieur sert uniquement d'appui à la butée d'attaque 9.

Suivant une variante de réalisation des articulations de l'amortisseur -ou du vérin-, la liaison supérieure est constituée d'une articulation élastique à chaque extrémité de l'axe effectuant le filtrage vertical, et d'une articulation centrale assurant le débattement en torsion.

On comprend à la lecture de la description ci-dessus que le dispositif de suspension de la présente invention permet avantageusement de conserver un volume de coffre important tout en préservant une fixation des élements de suspension 14 ou 28 qui ne vient pas perturber un bon filtrage.

Ce dispositif est également particulièrement simple à réaliser et peu coûteux du fait du faible dimensionnement de l'amortisseur ou du vérin de suspension.

## Revendications

1. Dispositif de suspension pour un train arrière d'un véhicule automobile du type à traverse déformable qui est constitué de deux bras tirés (1) reliés entre eux par une traverse (2) dont l'une des extrémités des bras supporte l'axe des roues (4) et l'autre extrémité est fixée à la structure (6) au moyen d'une articulation élastique (A), destinée à filtrer en partie les vibrations en provenance des roues (4), comportant pour chaque roue d'une part un amortisseur (14) disposé sous le plancher (6) du véhicule qui est incliné en direction de la roue (4) opposée dans un plan sensiblement vertical transversal à l'axe longitudinal du véhicule et d'autre part un moyen de rappel élastique également disposé sous le plancher (6),
caractérisé en ce que l'amortisseur (14) est interposé entre le plancher (6) et le train arrière en étant fixé d'une part dans sa partie inférieure (14a) sur le bras tiré (1) par l'intermédiaire d'une articulation élastique (15a) prise dans une chape (15) soudée sur ledit bras tiré (1) et d'autre part dans sa partie supérieure (14b) sur le plancher (6) par l'intermédiaire d'une articulation élastique (17), chacune des articulations élastiques (15a et 17) étant constituée d'un axe (20 et 24) traversant un manchon élastique qui est rendu solidaire de l'amortisseur (14), et en ce que chacun des axes (20 et 24) des articulations de l'amortisseur (14) est contenu respectivement dans un plan (P1 et P2), ces deux plans (P1 et P2) étant parallèles entre eux et orthogonaux à l'axe (C) de l'amortisseur mais lesdits axes (20 et 24) des articulations ne sont pas parallèles entre eux.

2. Dispositif selon la revendication 1, caractérisé en ce qu'au niveau sensiblement de l'axe (M) de la roue (4) est disposé un appui inférieur (7) des moyens de rappel élastique (8 et 9) qui est solidaire du bras tiré.

3. Dispositif selon la revendication 2, caractérisé en ce que le moyen de rappel élastique est constitué d'une part d'un ressort à boudin (8) et d'autre part d'une butée élastique (9) fixée au plancher (6) et centrée à l'intérieur du ressort (8).

4. Dispositif selon la revendication 3, caractérisé en ce qu'au droit de l'appui inférieur (7) est aménagé sur le plancher (6) un appui supérieur (13) pour le ressort (8).

5. Dispositif selon la revendication 1, caractérisé en ce que l'amortisseur est constitué d'un vérin hydropneumatique (28) qui est relié à une sphère (29).

6. Dispositif selon la revendication 5, caractérisé en ce que le moyen de rappel élastique est constitué d'une butée élastique (9) fixée sur le plancher (6) et qui est apte à coopérer avec un appui inférieur (7) fixé sur le bras (1) au niveau sensiblement de l'axe (M) de la roue (4).
